(19) Europäisches Patentamt
European Patent Office
Office européen des brevets

(11)  **EP 2 847 655 B1**

(12)  **EUROPEAN PATENT SPECIFICATION**

(45) Date of publication and mention
of the grant of the patent:
**27.03.2019  Bulletin 2019/13**

(21) Application number: **13730348.3**

(22) Date of filing: **10.05.2013**

(51) Int Cl.:
***G06F 3/042*** *(2006.01)*

(86) International application number:
**PCT/IB2013/053786**

(87) International publication number:
**WO 2013/168127 (14.11.2013 Gazette 2013/46)**

(54)  **TOUCH-SENSITIVE DEVICE AND DETECTION METHOD**

BERÜHRUNGSEMPFINDLICHE VORRICHTUNG UND DETEKTIONSVERFAHREN

DISPOSITIF TACTILE ET PROCÉDÉ DE DÉTECTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.05.2012  IT MI20120813**

(43) Date of publication of application:
**18.03.2015  Bulletin 2015/12**

(73) Proprietor: **Sensing Electromagnetic Plus
Corporation
Palo Alto CA 94303 (US)**

(72) Inventors:
• **LEVI, Alessandro**
  **20068 Peschiera Borromeo (MI) (IT)**
• **BECCAI, Lucia**
  **57128 Livorno (LI) (IT)**
• **PIOVANELLI, Matteo**
  **10014 Caluso (TO) (IT)**
• **FURLAN, Silvano**
  **20017 Rho (MI) (IT)**
• **MAZZOLAI, Barbara**
  **57016 Castiglioncello (LI) (IT)**

(74) Representative: **Perani & Partners S.p.A.
Piazza Armando Diaz, 7
20123 Milano (IT)**

(56) References cited:
**EP-A2- 2 369 451        WO-A2-2008/004101
US-A1- 2010 097 348    US-A1- 2011 261 020**

**Description**

The present invention refers to an innovative touch-sensitive device comprising a sensor and a control circuit.

The present invention also refers to a touch-sensitive detection method.

BACKGROUND

In recent years, the study of touch-sensitive devices has had substantial development in favour of multiple specialist applications, for example in the field of robotics, and also for widespread use in commonly-used apparatuses.

Indeed, by using artificial graphical interfaces, many last-generation apparatuses have replaced the usual keypad with a touch screen, which is sensitive to the touch of a user. This allows quick and easy use of the apparatus even by the inexperienced user. Touch screens are used in apparatuses like: cellular telephones, POS (Point of Sales), information kiosks, ATMs (Automatic Teller Machines), automatic machines for buying electronic tickets, tablet PCs, home automation systems and other similar apparatuses.

In particular, the screen can be thought of as a two-dimensional grid and when a user touches a letter or a predetermined area on the screen with a finger or with a pointed object, by using software processing the contact is located and the touch is recognised. The locating of the touch is based on detection methods that usually use devices with resistive or capacitive sensors, which use ultrasound waves or infrared (IR) detection signals. Devices with resistive sensors allow low-cost touch screens to be made and allow a pointer to be used to make the contact.

Such devices, although advantageous from various points of view, do however have some drawbacks. The display-touch screen juxtaposition generates a reduction in the transmission of light to the screen and jeapordises optimal visibility for the user. Moreover, there is a minimum pressure threshold, detected by the resistive sensor and possible contacts with pressure below the threshold go unnoticed.

Moreover, such touch screens are highly sensitive to scratches.

Devices with capacitive sensors allow touch screens to be made with resistant outer surfaces that allow the direct use of human fingers without any passivation on the interface.

Although advantageous from various points of view, devices with capacitive sensors have some drawbacks. Indeed, they are not fully transparent, having a limited contact detection speed, and they are also sensitive to the temperature of use. Moreover, such devices have high production costs, linked to the complex production processes.

A further example of an optical device with touch screen is described in American patent application US2011/0261015 of Lu et al. The optical device comprises a panel having a substrate with a contact interface (X-Y) and side surfaces, two pairs of receiver-transmitter units arranged facing one another close to the side surfaces and configured to supply detection signals in the substrate and to receive detection signals from the substrate. The receivers allow the contact to be located along the axis X and along the axis Y.

Although advantageous from various points of view, such devices also suffer from the drawbacks indicated above.

Devices that use sound wave sensors are susceptible to foreign agents like water and dust that deteriorate the detection of the contact and therefore the performance of the screens.

Known solutions that use optical sensors based on infrared rays allow some of the aforementioned drawbacks to be overcome. The pressure thresholds are lower and allow more detailed detection of a contact with the interface with respect to the other types of sensors indicated.

A touch screen system is described in American patent application US 2011/0115748 in which a detection area comprises at least two sides in which light transmitters LT and light receivers LR are arranged, alternating with one another, which are coupled and selected among one another as a function of the respective position.

Another solution is described in international patent application PCT n° WO2009/020940 A2, filed to Perceptive Pixel Inc. The device illustrated uses a waveguide suitable for transmitting infrared rays and for totally reflecting the rays received and an image sensor that intercepts the light that comes out from the waveguide, due to the Frustrated Total Internal Reflection (FTIR) phenomenon, caused by the contact of an object with the interface of the waveguide.

Another known solution is described in American patent application US2011/0175852 to Goerzl et al. , in which a touch screen system is based on the transmission and on the reception of light rays, using waveguides and two reflection surfaces, one parabolic and one elliptical, juxtaposed over one another and positioned at the edges of the display.

EP 2 369 451 A2 discloses an optical touch panel comprising a planar waveguide with emitter and receiver pairs respectively placed on opposite sides of the waveguide.

The devices that use optical sensors described above, although advantageous from various points of view, being able to detect more than one contact simultaneously for some spatial configurations, are limited to determining a single contact, and also have a substantially rigid structure.

SUMMARY

It would be advantageous to be able to make touch-sensitive detection devices with versatile operation and that allow the performance and the fields of use to be increased. It is also desirable to be able to discriminate many simultaneous contacts as well as to be able to discriminate the pressure of the contact, whether heavy or light. Moreover, it would be desirable to be able to make touch-sensitive detection devices that, also using non-rigid structures, can be used with curved surfaces, and that also have a high spatial and temporal resolution, a low power consumption and are easy to manufacture.

The purpose of the present invention is to make a touch-sensitive detecting device and a touch-sensitive detection method that satisfy the aforementioned requirements. Such a purpose is accomplished by a touch-sensitive device according to claim 1. Such a purpose is also accomplished by a touch-sensitive detection method according to claim 9.

The invention is defined by the independent claims. Further aspects of the invention are outlined in the dependent claims. Embodiments which do not fall within the scope of the claims do not describe part of the present invention.

DRAWINGS

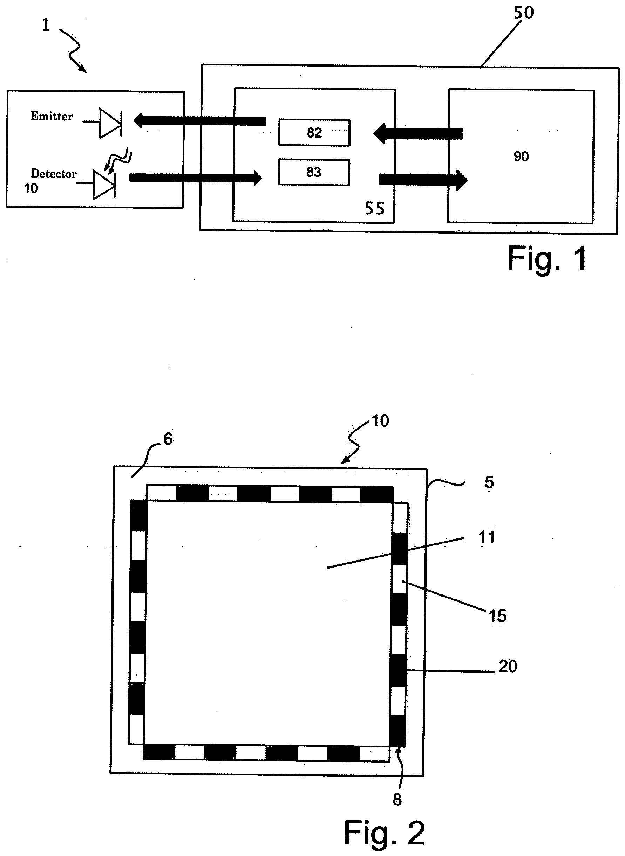

- figure 1 shows a schematic view of a touch-sensitive device according to the present invention;
- figure 2 shows a schematic view from above of a sensor according to the present invention;
- figure 3 shows a schematic view from above of the sensor of figure 2, highlighting some possible detection signals emitted by an active emitter;
- figure 4 shows a cross section view, carried out according to the line IV-IV of the sensor of figure 3 without objects in contact with the upper interface;
- figure 5 shows a schematic view from above of the sensor of figure 3 with an object in contact with the upper interface;
- figure 6a shows a view similar to that of fig. 4 of the sensor with the upper interface in contact with an object;
- figure 6b shows a view similar to that of fig. 4 of the sensor with the upper interface deformed upon contact with an object;

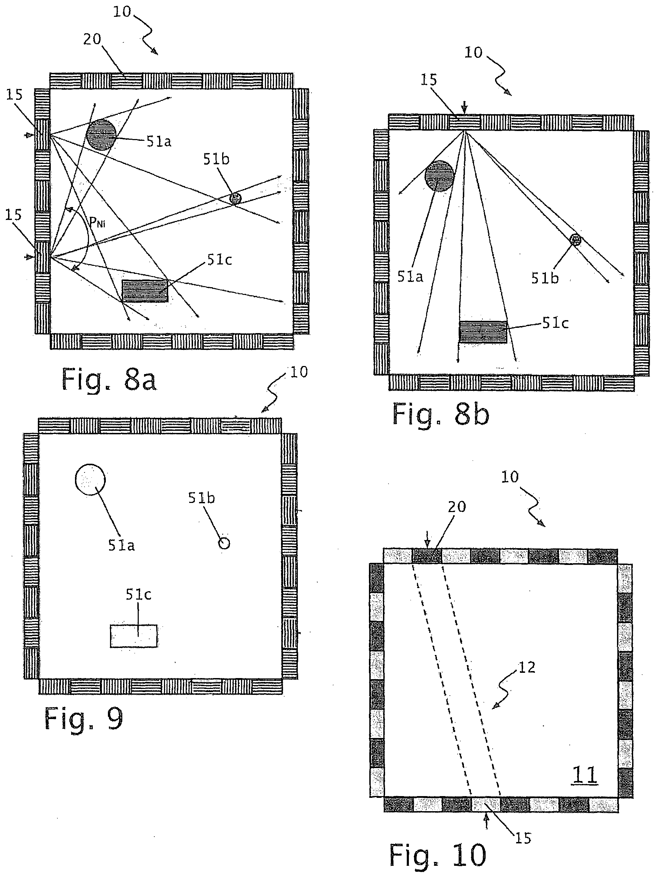

- figures 7a-7d, 8a-8b and 9 show schematic views from above of the sensor of figure 2 in various operating steps according to the present invention, with three objects in contact with the upper interface;
- figure 10 shows the sensor of figure 2 in an embodiment of a mapping step of the upper interface;
- figure 11 shows a block diagram relating to the operation of the device according to the present invention,
- figures 12 and 13 show two block diagrams that detail the operating scheme illustrated in figure 11.

DETAILED DESCRIPTION

With reference to the attached figures, reference numeral 1 globally indicates a touch-sensitive detecting device in accordance with the present invention, comprising a sensor 10 associated with a control circuit 50. The sensor 10 has a layer 5 of material that comprises a first interface 6 and a second interface 7, facing one another. The first interface 6 and the second interface 7 are substantially identical and functionally the same.

In an embodiment, the first interface 6 defines a detection area 11 for the sensor 10, suitable for detecting at least one object 51 in contact with it.

A number N of emitters 15 and a number M of receivers 20 are coupled with the layer 5 and arranged along a peripheral portion 8 of the detection area 11, in a predetermined order.

According to an embodiment, the detection area 11 is defined by the arrangement of the N emitters 15 and of the M receivers 20.

Each emitter 15 is suitable for emitting a beam Pn of detection signals 30 at a wavelength. It should be noted that the detection signals 30 are electromagnetic signals that are not limited to the visible spectrum but can extend from infrared IR to ultraviolet UV.

Each receiver 20 is suitable for receiving at least one detection signal 30 of the beam Pn emitted by the N emitters 15.

In an embodiment, each of the M receivers 20 transforms the detection signal 30 received into an output signal that, substantially, is an electrical current signal 10, which is suitably stored by the control circuit 50 in suitable memory means 83.

In particular, the layer 5 acts like a waveguide for the detection signals 30 emitted by each of said N emitters 15. The layer 5 is a substantially flat structure that conveys electromagnetic waves inside a path confined between the first interface 6 and the second interface 7. The layer 5, being transparent to the wavelength of the detection signals 30, propagates in a guided and transparent manner the detection signals 30 emitted by the N emitters 15 and received by the M receivers 20 arranged peripherally to the layer 5.

In the case in which there are no objects 51 in contact with the detection area 11, the detection signals 30 sent by each active emitter 15 are received by each receiver 20 without losses of electromagnetic intensity with the exception of the possible attenuation due to the transmission of the detection signal 30 in the waveguide 5. Even more specifically, considering n1 to be the refraction index of the layer 5 in contact with air, the detection signals 30 emitted by each of the N emitters 15 with an electromagnetic intensity J0, are transmitted in the waveguide 5 and received by the active receivers 20 with a known attenuation of intensity that can be determined based on the material constituting the layer 5 and on the transmission path.

If, on the other hand, an object 51 with a refraction index n2 is in contact with the first interface 6 and considering n1 to the the refraction index of the layer 5, with n2>nl, the detection signals 30 that are transmitted in the waveguide 5 and that come in contact with the portions of the first interface 6 in contact with the area occupied by the object 51, lose electromagnetic intensity.

In the illustrated embodiment, the sensor 10 has the N emitters 15 and the M receivers 20 alternating with one another, with the number N equal to the number M.

Of course, based on predetermined design choices, the numbers N and M can be different from one another and the N emitters 15 and the M receivers 20 can be arranged in pairs or in predetermined groups comprising a number of emitters 15 and receivers 20 that is variable over time, being able to be suitably activated or deactivated.

The control circuit 50 is associated and controls each of said N emitters 15 and each of said M receivers 20 storing the output signals of the active receivers 20. In particular, the N emitters 15 are activated in a predefined sequence.

In an embodiment, the N emitters are activated one at a time in a predefined sequence. In another embodiment, one or more of the N emitters 15 can be activated simultaneously. In the rest of the description we will refer to a single activation for each of the N emitters 15.

According to an aspect of the present invention, the control circuit 50 is suitable for associating a subset of M receivers 20 with each of said N emitters 15.

In particular, the N emitters 15 are activated in a predefined sequence, whereas the reading of the detection signals 30 received is carried out on a significant subset of the M receivers 20. In particular, the number of receivers 20 of each subset varies as a function of the position of the active emitter 15 and it can also vary over time according to some specifications that can be included in the control circuit 50 as well as based on the physical characteristics of the touch-sensitive device 1, as will be made clearer in the rest of the description.

The control circuit 50 is suitable for detecting for each emitter 15 of said predefined sequence the output signals of said associated subsets of receivers 20, to define a sequence of output signals of said M receivers 20. Moreover, the control circuit 50 comprises a processing unit 55 and is suitable for processing a sequence of difference signals obtained as the difference between the output signals and suitable predefined reference signals to determine at least one position or a volumetric distribution of the deformation of the detection area 11. The position or the volumetric distribution is defined as a signal representative of said at least one object 51 in contact with the detection area 11. The attenuated signals received that take on a lower value with respect to the reference signals give a non-zero contribution to the reconstruction of the signal representative of the object 51. According to an aspect of the present invention, there is a combination between the geometric arrangement of the emitters 15 and of the receivers 20, which are positioned alternating with one another around the detection area 11, the sequential activation mode and a combination of all of the signals received during the activation sequence in which the information is obtained from the difference signals. In particular, the reconstruction aggregates all of the difference signals referring to a specific point of the detection area 11 with a back-projection step.

In particular, there is a suitably detected sequence of output signals that defines a sequence of reference signals for said M receivers 20, which is stored in said memory means 83. In this way, the processing unit 55, in order to determine the signal representative of said at least one object 51, can use attenuation coefficients that derive from the comparison between the sequence of output signals detected and the sequence of reference signals of said M receivers 20.

According to an embodiment, the processing unit 55 comprises an amplifier circuit 82 suitable for amplifying the output signals of said M receivers 20.

The processing unit 55 is associated with a reconstruction unit 90 that analyses, processes and elaborates the output signals detected to obtain each signal representative of the at least one object 51.

In a different embodiment, the sequence of reference signals of said M receivers 20 used to later determine the signal representative of the at least one object 51, is stored, permanently, in said memory means 83.

The signal representative of the at least one object 51 is suitable for determining a relative position of the at least one object 51 with respect to the first interface 6 and/or for determining the shape or volumetric distribution or the position of such at least one object 51.

According to a further aspect of the present invention, the detection area 11 is divided into a plurality of basic elements and the processing unit 55 is suitable for associating each pair of emitter-receiver, which is activated in an associated manner, with the basic elements that belong to a portion 12 of the detection area 11 that associates the pair of emitter-receiver. This makes it possible, in particular, to map the detection area 11 of the first interface 6. Each pair of emitter-receiver, which is activated in an associated manner, is a pair in which the emitter 15 is comprised in the predefined sequence and the receiver 20 is comprised in the subset of associated receivers 20.

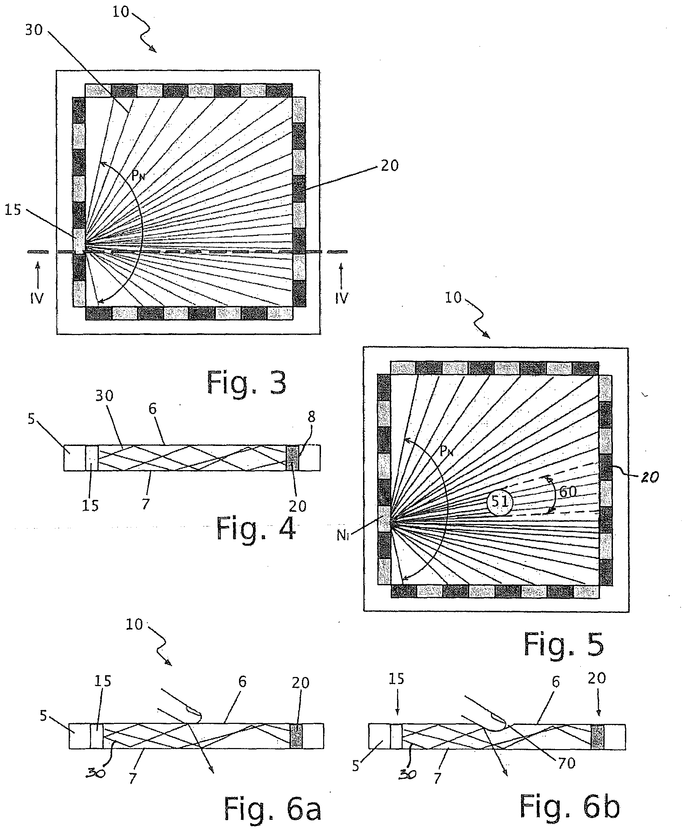

In the embodiment illustrated in figure 5, the object 51 in contact with the detection area 11 is a circle that can represent a finger of a user, an end of a pointer or a similar object. The detection signals 30 emitted by the active emitter 15 and that intercept, crossing the layer 5, the portion of the detection area 11 in contact with the object 51, in a plan view of the sensor 10, are comprised in a shade cone 60. The shade cone 60 has the vertex at the active emitter 15 and the ends represented by the tangents to the portion of the detection area 11 occupied by the object 51.

In particular, the detection signals 30 contained in such a shade cone 60 reach the M receivers 20 with reduced electromagnetic intensity J, since they have crossed the contact zone.

For each active emitter 15 of the predefined sequence, there will be a respective shade cone 60 and the detection signals contained in such shade cones 60 will be received by the M receivers 20 with reduced intensity, defining output signals of lower intensity with respect to the intensity of the reference signals. The processing of the output signals of the predefined sequence of active emitters 15 allows the position and the shape of the object 51 to be determined.

According to an embodiment, the reconstruction unit 90 foresees a reconstruction algorithm that analyses the intensity losses of the output signals of said M receivers 20 with respect to the intensity of the sequence of reference signals stored in said memory means 83.

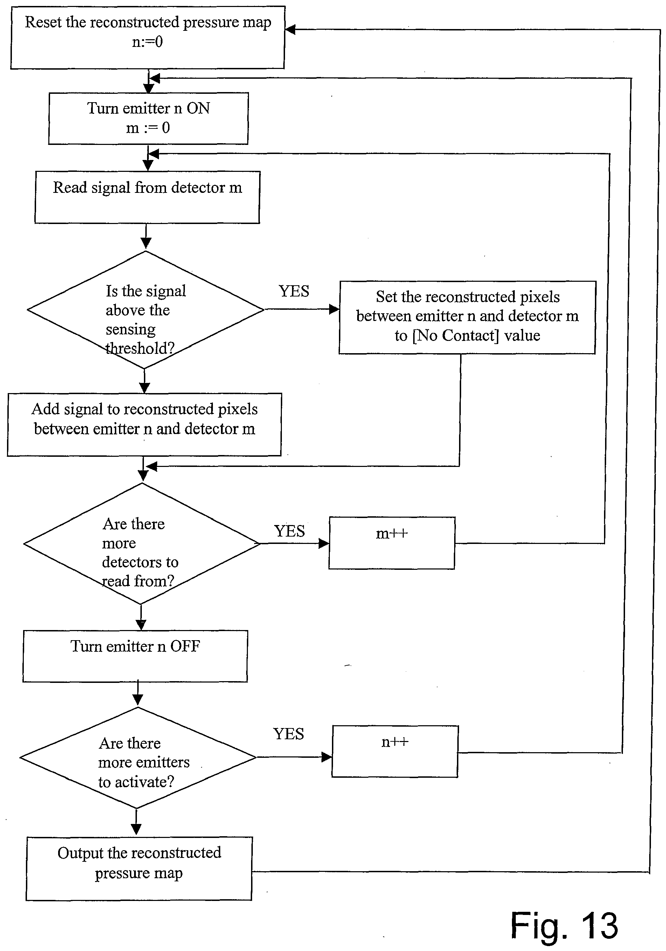

In particular, figure 13 illustrates an example of a reconstruction algorithm applicable to the touch-sensitive device 1, according to the present invention, in which it is foreseen to use the weighted algebraic sum of the sequence of signals received by said M receivers 20.

In an embodiment, the layer 5 of the touch-sensitive device 1 is a layer that is flexible and deforms on contact with the object 51. In particular, the layer 5 is made from thin and transparent polymeric material. The object 51 in contact with the detection area 11 creates a depression 70 the deformation of which depends on the pressure exerted by the object 51 and on the intrinsic characteristics of the deformable layer 5.

As schematically illustrated in figure 6b, some detection signals 30 crossing the waveguide 5, when they intercept the depression 70, are attenuated and a part of the reflected electromagnetic wave can also be reflected out from the layer 5, actually reducing the part of electromagnetic wave transmitted. Therefore, the detection signals 30 emitted by the N emitters 15 are received by the sequence of the M receivers 20 with an attenuated electromagnetic intensity that is a function of the depression 70 and of the layer 5.

The difference between the output signals and the reference signals, through suitable algorithms, will make it possible to determine the distribution of the deformation of the first interface 6 and to work out the pressure exerted by the object 51 in contact with the detection area 11.

According to an embodiment, it can be said that the relationship between the electromagnetic intensity J of the detection signals 30 received by the receivers 20 and the pressure P exerted by the object 51 is given by a function:

$$P(i,j) = F\left(\sum_{1}^{M}\sum_{1}^{N} J_K\right)$$

in which F is a function that in a reconstruction algorithm takes into account the sum of the electromagnetic intensity J of the detection signals 30 emitted by all of the N emitters 15 and that reach each receiver 20;

P (i,j) represents the pressure calculated in the specific point (i,j) of the detection area 11.

Advantageously, the function F processes the difference signals that detect the attenuation of the detection signals 30 received with respect to the reference signals. In particular, the pressure P (i,j) in the specific point (i,j) of the detection area 11 is obtained as a combination of the difference signals detected for all of the N emitters 15 activated according to the predefined sequence.

According to an embodiment, the difference signals are also scaled based on geometric considerations, like for example the distance between emitter 15 and receiver 20 and the number of emitters-receivers pairs associated with the specific point (i,j) of the detection area 11. In this way, the signal representative of the object 51 is reconstructed as a weighted combination of the difference signals. Advantageously, all of the difference signals received are then aggregated with a back-projection step rather than independently using, as in the prior art, the individual signals received and associated with the active emitter-receiver pair.

Advantageously, the touch-sensitive device 1 with the layer 5 made from deformable, flexible and shapable material extends its possible applications.

In terms of the operating principle, let us consider the touch-sensitive device 1 in the embodiment illustrated in figure 3 in which the layer 5 lacks objects 51 in contact with the detection area 11. The control circuit 50 activates each emitter 15 in the predefined sequence and detects the output signals of the detectors 20 comprised in each subset of receivers 20 defining the sequence of reference signals, which is stored in said memory means 83. Advantageously, since the layer 5 is transparent and since there are no objects 51 in contact with the detection area 11, the detection signals 30 sent by the predefined sequence of active emitters 15 are received without losses of electromagnetic intensity defining the sequence of reference signals.

The control circuit 50 then carries out the mapping of the detection area 11 associating each pair of emitter-receiver with the basic elements that belong to the corresponding portion 12 of the detection area 11 associated with the pair of emitter-receiver, activated in an associated manner.

In the case in which one or more objects 51 are in contact with the detection area 11, the control circuit 50 detects the sequence of output signals of the receivers M and through their processing and the comparison with the sequence of reference signals, defines the shape, position and possible pressure of such objects 51.

In an alternative embodiment, the control circuit 50 finds the values of the sequence of reference signals and also the mapping of the detection area 11 in said memory means 83, in which such values have been stored beforehand.

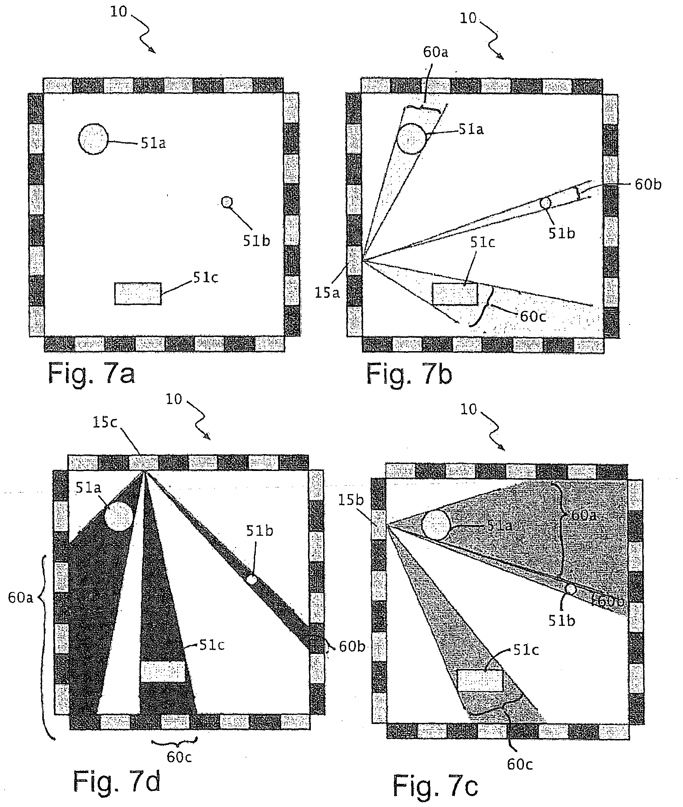

The touch-sensitive device 1, according to the present invention, allows effective multi-touch detection of shape, position and pressure of multiple contacts. Indeed, as illustrated in figures 7a-7d, three objects 51a-51c are in contact with the detection area 11. During the activation sequence, the three different emitters 15a-15c are activated individually, while the M receivers 20 are activated. Each object 51a-51c defines a respective shade cone 60a-60c and through the analysis of the sequence of output signals from the receivers 20, the position, the shape and the possible pressure of each of the three objects 51a-51c in contact with the detection area 11 are obtained. The greater the number of emitters activated the greater the precision with which the shapes of the objects 51a-51c in contact with the detection area 11 are detected.

According to a further aspect of the present invention, the touch-sensitive device 1 can, during operation, redefine the sequence of reference signals of said M receivers 20, for example following variations over time of the technical or physical characteristics of the layer 5 of the sensor 10. This allows the touch-sensitive device 1 to be made precise and reliable, allowing the touch-sensitive device 1 to operate with the sensor 10 according to new and different conditions of use.

It should also be noted that the touch-sensitive device 1 of the present invention makes it possible to reconstruct the pressure map without using a matrix distributed over the entire first interface 6. Indeed, the reading of the signals is obtained using a smaller number of construction components, with respect to the prior art, in particular receivers 20, with a significant advantage that translates into a lower production cost as well as simplicity of manufacture and less power used.

The present invention also refers to a detection method for a touch-sensitive device 1 comprising a sensor 10 controlled by a control circuit 50 comprising a processing unit 55. The touch-sensitive device 1 is similar to the device described above, for which details and cooperating parts having the same structure and function will be indicated with the same reference numerals and symbols.

The sensor 10 comprises a layer 5 having a first interface 6 and a second interface 7 facing one another, substantially identical and functionally the same. In an embodiment, the first interface 6 defines a detection area 11 for at least one object 51 in contact with said detection area 11.

The sensor 10 also comprises a number N of emitters 15 and a number M of receivers 20 associated with the layer 5 that are arranged along a peripheral portion 8 of the detection area 11 alternating with one another in a predetermined order. Each emitter 15 is suitable for emitting a beam of detection signals 30 at a wavelength that is not limited to the visible spectrum but can extend from infrared IR to ultraviolet UV.

Said M receivers 20 are suitable for receiving at least a detection signal of said beam of detection signals 30 emitted by each emitter 15 and for generating a corresponding output signal. The layer 5 is transparent to the wavelength of the detection signals 30 emitted by each emitter 15 and defines a waveguide for the detection signals 30.

The detection method comprises an association step, in which the N emitters 15 and the M receivers 20 are associated alternating with one another along at least a peripheral portion 8 of the detection area 11 and in which each emitter 15 is associated with a subset of M receivers 20, defining for each said active emitter 15 an associated subset of M receivers 20.

The subset of M receivers 20 corresponding to each active emitter 15 can vary at any moment in time as a function of the relative position of the active emitter 15; moreover, the subset of M receivers 20 can be modified by the control circuit 50 to optimise the operation of the optical detector, for example based on the geometry of the detection area 11 or based on performance requirements, like speed of reconstruction.

The method also comprises the following steps:

- activating said N emitters 15 in a predefined sequence to define a sequence of active emitters 15;
- activating for each active emitter 15 of said predefined sequence said M receivers 20;
- detecting for each active emitter 15, of said predefined sequence, the output signals of each receiver 20 comprised in the associated subset of M receivers 20, defining a sequence of output signals.

In an embodiment, the N emitters 15 are activated one at a time in a predetermined sequence. In another embodiment, one or more of the N emitters 15 can be activated simultaneously. In the rest of the description we will refer to a single activation for each of the N emitters 15.

The method then comprises a reconstruction step 140 in which the sequence of output signals is processed and compared with a sequence of reference signals to generate at least one signal representative of said at least one object 51 in contact with the detection area 11.

Moreover, the method comprises a first step 110 that is activated before the reconstruction step 140 and that foresees to initiate a calibration and a configuration of the sensor 10.

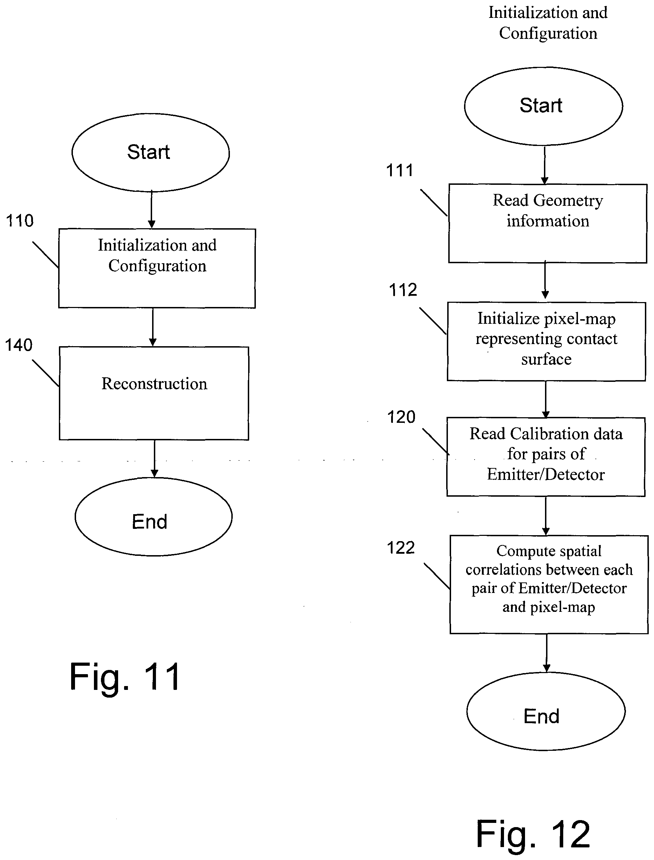

In particular, as schematically illustrated in figure 12, the first step 110 comprises:

- a geometric initialization 111 in which the position and the order of each of the N emitters 15 and of each of the M receivers 20 are automatically determined, suitably activating said emitters 15 and said receivers 20 through the control circuit 50;

- a virtualization 112 of the detection area 11 in which a representation of the detection area 11 is created, in particular the detection area 11 is partitioned into basic elements, uniquely associating each basic element with respective space coordinates. In particular, such a representation is used to implement the reconstruction.

Moreover, the first step 110 comprises:

- a calibration 120 in which for each active emitter 15-receiver 20 pair a reference signal is associated for the output signal. Such a reference value can be provided thanks to a first reading cycle, activating each emitter 15 in series, or dynamically refreshed through repeated reading cycles, for recalibration during operation. Moreover, the first step 110 comprises a spatial correlation 122 between the virtualisation of the detection area 11 obtained with the virtualisation 112 and each active emitter-receiver pair.

During the spatial correlation 122 there is substantially the mapping of the detection area 11 and the control circuit 50 associates said pair of emitter-receiver, which are activated in an associated manner, with the basic elements of said virtualisation 112 that belong to a portion 12 of the detection area 11 that connects said pair of emitter-receiver. In the specific case in which there is a video visualisation, the basic elements of the detection area 11 are pixels and the portion 12 of the detection area 11 can be a beam that connects the pair of emitter-receiver.

In some embodiments, the first step 110 comprises the automatic definition of the subsets of said M receivers 20 activated for each active emitter 15. Such automatic definition foresees, for each active emitter 15, the selection of the M receivers 20 that receive a detection signal 30 the intensity of which is greater than a predetermined threshold and that will make up the subset of said M receivers 20 associated with said active emitter 15.

In particular, if for the calibration 120 the reference values are obtained during a reading cycle, the detection signals 30, sent by each active emitter 15 of the sequence of active emitters 15, are received by the active receivers 20 with an unchanged electromagnetic intensity that is substantially equal to the electromagnetic intensity of the signal sent. It is possible, in some cases, to detect the attenuation of the electromagnetic intensity of the signal received due to the transmission of the detection signal 30 in the waveguide 5.

The calibration 120 of the method can be carried out automatically and repeated whenever it is required to redefine the sequence of reference signals of the sensor 10 for the recalibration of the sensor 10 itself, optimising its operation in new operating conditions. For example, it may become necessary to redefine the sequence of reference signals for said M receivers 20, when an object 51 is present and stays in the detection area 11. This makes the method precise and reliable with a substantial enhancement of the use of the touch-sensitive device 1.

It should be noted that the geometric initialization 111, the virtualization 112, the calibration 120 and the spatial correlation 122 may not be implemented in the first step 110 of the method, in the case in which the information that they produce is otherwise available. For example, in the case in which some data is directly stored on nonvolatile memories comprised in the touch-sensitive device 1 at the moment of assembly of the sensor 10.

According to an embodiment, the reconstruction step 140 processes the sequence of output signals using a detection algorithm. In particular, the detection algorithm detects the difference signals, which substantially indicate the attenuation of the detection signals 30 with respect to the reference signals. The reconstruction step 140 foresees combining together the difference signals detected for all of the emitters 15 activated of the predefined sequence so as to obtain the signal representative of the object 51.

According to an embodiment, the difference signals are also scaled based on geometric considerations, like for example the distance between emitter 15 and receiver 20 and the number of emitters-receivers pairs associated with a specific point (i,j) of the detection area 11. In this way, the signal representative of the object 51 is reconstructed as a weighted combination of the difference signals. Advantageously, according to the present invention, all of the difference signals received are then aggregated.

The reconstruction step 140 makes it possible to detect the shape and position of each individual object 51 in contact with the detection area 11. Moreover, the detection takes place simultaneously for all of the objects 51 in contact with the interface 6. Furthermore, in the case in which the material of the layer 5 is flexible deforming on contact with the object 51, the reconstruction step 140 allows the distribution of the pressure to be detected.

Through the reconstruction step 140, in each reading cycle, there is the detection of at least one object 51 reading and processing the output signals of the receivers 20 that are associated with each active emitter 15. In particular, the reconstruction step 140 uses the difference between the reference values and the output signals read in each reading cycle so as to determine a signal representative for each object 51 present simultaneously in the detection area 11.

The representative signal can be a signal that defines, in addition to the shape and the position, in the case in which the material of the layer 5 is deformable and flexible, also the pressure of each object 51 with the first interface 6.

The touch-sensitive detection method foresees for each basic element, defined by the virtualization 112 of the detection area 11, the use of a weighted sum of the differences between the reference values of the detection signals 30 used in the calibration 120 and the output signals read in each reading cycle, as schematically illustrated in figure 13.

According to the present invention, therefore, the touch-sensitive detection method makes it possible to detect the shape and position of each individual object of a plurality of objects 51 simultaneously in contact with the detection area 11. Moreover, for each individual object it is possible to determine the relative pressure distribution between the individual object and the interface 6 in the case in which the material of the layer 5 is flexible and deforms on contact with the object 51.

As can be appreciated from what has been described, the present invention achieves the preset purposes.

The touch-sensitive device, through the comparison between the sequence of reference signals and the sequence of output signals of said receivers, makes it possible to reliably detect at high speed one or more objects in contact with the detection area. The touch-sensitive device, according to the present invention, is particularly immune to electromagnetic noise and therefore particularly reliable in multiple applications. Moreover, the touch-sensitive device according to the present invention can also be used with curved waveguides. From some experimental tests, the Applicant has verified its feasibility on curved surfaces with dimensions of over a few metres. Moreover, in the case of a sensor or device comprising a layer of flexible material, the present invention makes it possible to determine the pressure exerted by the object and furthermore to discriminate between multiple pressures.

## Claims

1. Touch-sensitive detecting device (1) comprising a sensor (10) and an associated control circuit (50),

 - said sensor (10) comprising a layer (5) with at least an interface (6) configured to define a detection area (11) for at least one object (51) in contact with said detection area (11), a number N of emitters (15) and a number M of receivers (20) coupled with said layer (5), said N emitters (15) being configured to emit a beam (Pn) of detection signals (30) at a wavelength in said layer (5) and said M receivers (20) being configured to receive at least a detection signal of said beam (Pn) of detection signals (30) emitted by said emitters (15) and configured to generate an output signal, said layer (5) being transparent at the wavelength of said detection signals (30) emitted by said N emitters (15) and configured to define a waveguide for said detection signals (30); wherein

 - said emitters (15) and said receivers (20) are arranged alternating with one another along at least two edges of said detection area (11);
 - said control circuit (50) configured to associate a subset of M receivers (20) with each of said N emitters (15), wherein the subset of receivers comprises a plurality of receivers;
 - said control circuit (50) is configured to actuate said N emitters (15) in a predefined sequence and to activate said subset of M receivers (20),
 - said control circuit (50) is also configured to detect for each active emitter (15) of said predefined sequence said output signals of said associated subset of receivers (20) to define a sequence of output signals;
 - said control circuit (50) comprising a processing unit (55) that is configured to process said sequence of output signals for determining at least a signal representative of said at least one object (51) in contact with said detection area (11),
 - said layer (5) is made of a material configured to deform when in contact with said at least one object (51), said processing unit (55) being configured to process said sequence of output signals for determining the deformation of said at least one interface (6) and for defining the pressure distribution of said at least one object (51) in contact with said detection area (11), said at least one signal representative of said at least one object (51) comprising said pressure distribution.

2. Device according to claim 1 wherein said at least one signal representative of said al least one object (51) is a signal suitable for defining a shape and/or a position of said at least one object (51).

3. Device according to claim 1, wherein said N emitters (15) are configured to be individually activated.

4. Device according to claim 1, wherein said sequence of output signals is configured to define a sequence of reference signals for said M receivers (20).

5. Device according to one of the previous claims, wherein said detection area (11) is adapted to be mapped in a plurality of basic elements, said control circuit (50) being configured to associate each pair of emitter-receiver, which is activated in an associated manner, a set of said basic elements belonging to a portion (12) of said detection area (11) associating said pair of emitter-receiver to said received of said pair of emitter-receiver.

6. Device according to one or more of the previous claims, wherein the number of said M receivers (20) that are comprised in each subset associated with each emitter (15) of said predefined sequence is variable over time.

**7.** Device according to one or more of the previous claims, wherein the perimeter of said detection area (11) is defined by the arrangement of the N emitters (15) and of the M receivers (20) in said layer (5).

**8.** Detection method for a touch-sensitive device comprising a sensor (10) and a control circuit (50) comprising a processing unit (55), said sensor (10) configured to be controlled by said control circuit (50) and comprising a layer (5) having at least an interface (6) configured to define a detection area (11) for at least one object (51) in contact with said detection area (11), a number N of emitters (15) and a number M of receivers (20) coupled with said layer (5), each of said N emitters (15) configured to emit a beam of detection signals (30) at a wavelength in said layer (5), said M receivers (20) configured to receive at least a detection signal of said beam of detection signals (30) emitted by said N emitters (15) and to generate an output signal, said layer (5) being transparent to the wavelength of said detection signals (30) emitted by said N emitters (15) and configured to define a waveguide for said detection signals (30); said method further comprising:

- an association step, wherein said N emitters (15) and said M receivers (20) are associated alternating with one another along at least two edges of said detection area (11) and wherein each of said N emitters (15) is associated with a subset of said M receivers (20), wherein the subset of receivers comprises a plurality of receivers;
- actuating said N emitters (15) in a predefined sequence and actuating said M receivers (20);
- detecting for each active emitter (15) of said predefined sequence said output signals of said associated subset of receivers (20), to define a sequence of output signals;

and by comprising a reconstruction step (140) wherein said sequence of output signals is processed and compared with a suitable sequence of reference signals for generating at least a signal representative of said at least one object (51) in contact with the detection area (11),

- wherein said reconstruction step (140) defines the pressure distribution of said at least one object (51) in contact with said detection area (11) when said layer (5) is made of a flexible material deforming when in contact with said at least one object (40), said at least a signal representative of said at least one object (51) comprising said pressure distribution.

**9.** Method according to claim 8, wherein said at least one signal representative of said at least one object (51) is a signal suitable for defining a shape and/or a position of said at least one object (51).

**10.** Method according to claim 8, wherein actuating said N emitters (15) individually.

**11.** Method according to claim 8, wherein including a first step (110) comprising:

- geometric initialization (111) in which said N emitters (15) and said M receivers (20) are activated through said control circuit (50) for automatically determining position and ordering of each of said N emitters (15) and each of said M receivers (20);
- virtualization (112) of said detection area (11) in which said detection area (11) is partitioned in basic elements and each basic element is associated with respective space coordinates.

**12.** Method according to claim 11, wherein said first step (110) further comprises a calibration (120) of said sensor (10) wherein each pair of emitter-receiver, which is activated in an associated manner during said predefined sequence, is associated with a reference signal so as to define a sequence of reference signals for said M receivers (20).

**13.** Method according to claim 12, wherein it comprises a spatial correlation (122) which provides for mapping said detection area (11) associating each pair of emitter-receivers, activated in an associated manner, with said basic elements of said virtualization (112) belonging to a portion (12) of said detection area (11) associating said pair of emitter-receivers.

**Patentansprüche**

**1.** Berührungsempfindliche Detektionsvorrichtung (1), umfassend einen Sensor (10) und eine dazugehörige Steuereinheit (50),

- wobei der Sensor (10) eine Schicht (5) mit mindestens einer Schnittstelle (6) umfasst, die konfiguriert ist, einen Detektionsbereich (11) für mindestens ein Objekt (51) in Kontakt mit dem Detektionsbereich (11), einer Anzahl N von Sendern (15) und einer Anzahl M von Empfängern (20), die mit der Schicht (5) gekoppelt sind, wobei die N Sender (15) konfiguriert sind, einen Strahl (Pn) von Detektionssignalen (30) mit einer Wellenlänge in der Schicht (5) zu senden, und die M Empfänger (20) konfiguriert sind, mindestens ein Detektionssignal des Strahls (Pn) von Detektionssignalen (30) zu empfangen, die von den Sendern (15) gesendet wurden, und konfiguriert sind, ein Ausgabesignal zu erzeugen, wobei die Schicht (5) bei der Wellenlänge des Detektionssignals (30), das von den N Sendern (15) gesendet wird, durchsichtig ist, und die konfiguriert sind, einen Wellenleiter für die Detektionssignale (30) zu definieren;

wobei:

- die Sender (15) und die Empfänger (20) untereinander abwechselnd entlang mindestens zweier Ränder des Detektionsbereichs (11) angeordnet sind;
- die Steuerschaltung (50) konfiguriert ist, einen Teilsatz von M Empfängern (20) mit jedem der N Sender (15) zu assoziieren, wobei der Teilsatz von Empfängern eine Vielzahl von Empfängern umfasst;
- die Steuerschaltung (50) konfiguriert ist, die N Sender (15) in einer vordefinierten Abfolge zu betätigen und den Teilsatz von M Empfängern (20) zu aktivieren,
- die Steuerschaltung (50) ebenfalls konfiguriert ist, für jeden aktiven Sender (15) aus der vordefinierten Abfolge die Ausgabesignale des assoziierten Teilsatzes von Empfängern (20) zu definieren;
- die Steuerschaltung (50) eine Verarbeitungseinheit (55) umfasst, die konfiguriert ist, die Abfolge von Ausgabesignalen zum Bestimmen von mindestens einem Signal zu verarbeiten, das für das mindestens eine Objekt (51) repräsentativ ist, das mit dem Detektionsbereich (11) in Kontakt steht,
- die Schicht (5) aus einem Material besteht, das konfiguriert ist, sich zu verformen, wenn es in Kontakt mit mindestens einem Objekt (51) ist, wobei die Verarbeitungseinheit (55) konfiguriert ist, die Abfolge von Ausgabesignalen zur Bestimmung der Verformung der mindestens einen Schnittstelle (6) und zum Definieren der Druckverteilung des mindestens einen Objekts (51) in Kontakt mit dem Detektionsbereich (11) zu verarbeiten, wobei das mindestens eine Signal, das für das mindestens eine Objekt (51) repräsentativ ist, die Druckverteilung umfasst.

2. Vorrichtung nach Anspruch 1, wobei:
das mindestens eine Signal, das für das mindestens eine Objekt (51) repräsentativ ist, ein Signal ist, das zum Definieren einer Form und/oder einer Position des mindestens einen Objekts (51) geeignet ist.

3. Vorrichtung nach Anspruch 1, wobei:
die N Sender (15) konfiguriert sind, einzeln aktiviert zu werden.

4. Vorrichtung nach Anspruch 1, wobei
die Abfolge von Ausgabesignalen konfiguriert ist, eine Abfolge von Bezugssignalen für die M Empfänger (20) zu definieren.

5. Vorrichtung nach einem der vorangegangenen Ansprüche, wobei der Detektionsbereich (11) ausgelegt ist, in eine Vielzahl von Grundelementen abgebildet zu werden, wobei die Steuerschaltung (50) konfiguriert ist, jedes Paar aus Sender-Empfänger zu assoziieren, das auf assoziierte Art und Weise aktiviert ist, wobei ein Satz aus den Grundelementen zu einem Teil (12) des Detektionsbereichs (11) gehört, der das Paar aus Sender-Empfänger mit dem Empfänger aus dem Paar aus Sender-Empfänger assoziiert.

6. Vorrichtung nach einem der vorangegangenen Ansprüche, wobei die Anzahl der M Empfänger (20), die in jedem Teilsatz enthalten ist, der mit jedem Sender (15) der vordefinierten Abfolge assoziiert ist, über die Zeit variabel ist.

7. Vorrichtung nach einem der vorangegangenen Ansprüche, wobei der Umkreis des Detektionsbereichs (11) durch die Anordnung der N Sender (15) und der M Empfänger (20) in der Schicht (5) definiert ist.

8. Detektionsverfahren für eine berührungsempfindliche Vorrichtung, umfassend einen Sensor (10) und eine Steuerschaltung (50), umfassend eine Verarbeitungeinheit (55), wobei der Sensor (10) konfiguriert ist, von der Steuerschaltung (50) gesteuert zu werden und eine Schicht (5) umfasst, die zumindest eine Schnittstelle (6) beinhaltet, die konfiguriert ist, einen Detektionsbereich (11) für mindestens ein Objekt (51) in Kontakt mit dem Detektionsbereich (11), einer Anzahl N von Sendern (15) und einer Anzahl M von Empfängern (20), die mit der Schicht (5) gekoppelt sind, wobei jeder der N Sender (15) konfiguriert ist, einen Strahl von Detektionssignalen (30) mit einer Wellenlänge in der Schicht (5) zu senden, wobei die M Empfänger (20) konfiguriert sind, mindestens ein Detektionssignal aus dem Strahl von Detektionssignalen (30) zu empfangen, der von den N Sendern (15) gesendet wird, und ein Ausgabesignal zu erzeugen, wobei die Schicht (5) bei der Wellenlänge der Detektionssignale (30), die von den N Sendern (15) gesendet werden, durchsichtig ist und konfiguriert ist, einen Wellenleiter für die Detektionssignale (30) zu definieren;
wobei das Verfahren ferner Folgendes umfasst:

- einen Assoziierungsschritt, wobei die N Sender (15) und die M Empfänger (20) untereinander abwechselnd entlang zweier Ränder des Detektionsbereichs (11) assoziiert werden und wobei jeder der N Sender (15) mit einem Teilsatz der M Empfänger (20) assoziiert wird, wobei der Teilsatz von Empfängern eine Vielzahl von Empfängern umfasst;

- Betätigen der N Sender (15) in einer vordefinierten Abfolge und Betätigen der M Empfänger (20);

- Detektieren für jeden aktiven Sender (15) aus der vordefinierten Abfolge die Ausgabesignale des assoziierten Teilsatzes von Empfängern (20), um eine Abfolge von Ausgabesignalen zu definieren; und durch Umfassen eines Wiederherstellungsschritts (140), wobei die Abfolge von Ausgabesignalen verarbeitet und mit einer geeigneten Abfolge von Bezugssignalen zum Erzeugen mindestens eines Signals verglichen wird, das für das mindestens eine Objekt (51) in Kontakt mit dem Detektionsbereich (11) repräsentativ ist,

- wobei der Wiederherstellungsschritt (140) die Druckverteilung des mindestens einen Objekts (51) in Kontakt mit dem Detektionsbereich (11) definiert, wenn die Schicht (5) aus einem flexiblen Material besteht, das sich verformt, wenn es mit dem mindestens einen Objekt (40) in Kontakt ist, wobei das mindestens eine Signal repräsentativ für das mindestens eine Objekt (51) ist, das die Druckverteilung umfasst.

9. Verfahren nach Anspruch 8, wobei:
das mindestens eine Signal, das für das mindestens eine Objekt (51) repräsentativ ist, ein Signal ist, das zum Definieren einer Form und/oder einer Position des mindestens einen Objekts (51) geeignet ist.

10. Verfahren nach Anspruch 8, wobei:
die N Sender (15) einzeln betätigt werden.

11. Verfahren nach Anspruch 8, wobei:
ein erster Schritt (110) beinhaltet ist, der Folgendes umfasst:

- die geometrische Initialisierung (111), in der die N Sender (15) und die M Empfänger (20) durch die Steuerschaltung (50) zum automatischen Bestimmen der Position und Reihung jedes der N Sender (15) und jedes der M Empfänger (20) aktiviert werden;
- Virtualisierung (112) des Detektionsbereichs (11), in der der Detektionsbereich (11) in Grundelemente unterteilt wird und jedes Grundelement mit entsprechenden Raumkoordinaten assoziiert ist.

12. Verfahren nach Anspruch 11, wobei:
der erste Schritt (110) ferner eine Kalibrierung (120) des Sensors (10) umfasst, wobei jedes Paar aus Sender-Empfänger, das auf assoziierte Art und Weise während der vordefinierten Abfolge aktiviert wird, mit einem Bezugssignal assoziiert wird, um eine Abfolge von Bezugssignalen für die M Empfänger (20) zu definieren.

13. Verfahren nach Anspruch 12, wobei:
es eine Raumkorrelation (122) umfasst, die eine Abbildung des Detektionsbereichs (11) bereitstellt, wobei jedes Paar aus Sender-Empfänger, das auf assoziierte Art und Weise aktiviert wurde, mit den Grundelementen der Virtualisierung (112) assoziiert wird, die zu einem Teil (12) des Detektionsbereichs (11) gehören, der das Paar aus Sender-Empfänger assoziiert.

## Revendications

1. Dispositif de détection tactile (1) comprenant un capteur (10) et un circuit de commande associé (50),

- ledit capteur (10) comprenant une couche (5) avec au moins une interface (6) configurée pour définir une zone de détection (11) pour au moins un objet (51) en contact avec ladite zone de détection (11), un nombre N d'émetteurs (15) et un nombre M de récepteurs (20) couplés à ladite couche (5), lesdits N émetteurs (15) étant configurés pour émettre un faisceau (Pn) de signaux de détection (30) à une longueur d'onde dans ladite couche (5) et lesdits M récepteurs (20) étant configurés pour recevoir au moins un signal de détection dudit faisceau (Pn) de signaux de détection (30) émis par lesdits émetteurs (15) et configurés pour générer un signal de sortie, ladite couche (5) étant transparente à la longueur d'onde desdits signaux de détection (30) émis par lesdits N émetteurs (15) et configurée pour définir un guide d'onde pour lesdits signaux de détection (30) ; dans lequel
- lesdits émetteurs (15) et lesdits récepteurs (20) sont agencés en alternance le long d'au moins deux bords de ladite zone de détection (11) ;
- ledit circuit de commande (50) configuré pour associer un sous-ensemble de M récepteurs (20) avec chacun desdits N émetteurs (15), où le sous-ensemble de récepteurs comprend une pluralité de récepteurs ;
- ledit circuit de commande (50) est configuré pour actionner lesdits N émetteurs (15) dans une séquence prédéfinie et pour activer ledit sous-ensemble de M récepteurs (20),
- ledit circuit de commande (50) est également configuré pour détecter pour chaque émetteur actif (15) de ladite séquence prédéfinie lesdits signaux de sortie dudit sous-ensemble associé de récepteurs (20) afin de définir une séquence de signaux de sortie ;
- ledit circuit de commande (50) comprenant une unité de traitement (55) qui est configurée pour traiter ladite séquence de signaux de sortie pour déterminer au moins un signal représentatif dudit au moins un objet (51) en contact avec ladite zone de détection (11),

- ladite couche (5) est faite en un matériau configuré pour se déformer lorsqu'il est en contact avec ledit au moins un objet (51), ladite unité de traitement (55) étant configurée pour traiter ladite séquence de signaux de sortie afin de déterminer la déformation de ladite au moins une interface (6) et de définir la répartition de pression dudit au moins un objet (51) en contact avec ladite zone de détection (11), ledit au moins un signal représentatif dudit au moins un objet (51) comprenant ladite répartition de pression.

2. Dispositif selon la revendication 1, dans lequel ledit au moins un signal représentatif dudit au moins un objet (51) est un signal approprié pour définir une forme et/ou une position dudit au moins un objet (51).

3. Dispositif selon la revendication 1, dans lequel lesdits N émetteurs (15) sont configurés pour être activés individuellement.

4. Dispositif selon la revendication 1, dans lequel ladite séquence de signaux de sortie est configurée pour définir une séquence de signaux de référence pour lesdits M récepteurs (20).

5. Dispositif selon l'une des revendications précédentes, dans lequel ladite zone de détection (11) est conçue pour être mappée en une pluralité d'éléments basiques, ledit circuit de commande (50) étant configuré pour associer chaque paire d'émetteur-récepteur, qui est activée d'une manière associée, un ensemble desdits éléments basiques appartenant à une portion (12) de ladite zone de détection (11) associant ladite paire d'émetteur-récepteur audit récepteur de ladite paire d'émetteur-récepteur.

6. Dispositif selon une ou plusieurs des revendications précédentes, dans lequel le nombre desdits M récepteurs (20) qui sont compris dans chaque sous-ensemble associé à chaque émetteur (15) de ladite séquence prédéfinie est variable dans le temps.

7. Dispositif selon une ou plusieurs des revendications précédentes, dans lequel le périmètre de ladite zone de détection (11) est défini par l'agencement des N émetteurs (15) et des M récepteurs (20) dans ladite couche (5).

8. Procédé de détection pour un dispositif tactile comprenant un capteur (10) et un circuit de commande (50) comprenant une unité de traitement (55), ledit capteur (10) étant configuré pour être commandé par ledit circuit de commande (50) et comprenant une couche (5) ayant au moins une interface (6) configurée pour définir une zone de détection (11) pour au moins un objet (51) en contact avec ladite zone de détection (11), un nombre N d'émetteurs (15) et un nombre M de récepteurs (20) couplés à ladite couche (5), chacun desdits N émetteurs (15) étant configuré pour émettre un faisceau de signaux de détection (30) à une longueur d'onde dans ladite couche (5), lesdits M récepteurs (20) étant configurés pour recevoir au moins un signal de détection dudit faisceau de signaux de détection (30) émis par lesdits N émetteurs (15) et pour générer un signal de sortie, ladite couche (5) étant transparente à la longueur d'onde desdits signaux de détection (30) émis par lesdits N émetteurs (15) et configurée pour définir un guide d'ondes pour lesdits signaux de détection (30) ;

ledit procédé comprenant en outre :

- une étape d'association, où lesdits N émetteurs (15) et lesdits M récepteurs (20) sont associés en alternance le long d'au moins deux bords de ladite zone de détection (11) et où chacun desdits N émetteurs (15) est associé à un sous-ensemble desdits M récepteurs (20), où le sous-ensemble de récepteurs comprend une pluralité de récepteurs ;
- le fait d'actionner lesdits N émetteurs (15) dans une séquence prédéfinie et d'actionner lesdits M récepteurs (20) ;
- le fait de détecter pour chaque émetteur actif (15) ladite séquence prédéfinie desdits signaux de sortie dudit sous-ensemble associé de récepteurs (20), afin de définir une séquence de signaux de sortie ;

et par le fait de comprendre une étape de reconstruction (140) où ladite séquence de signaux de sortie est traitée et comparée avec une séquence appropriée de signaux de référence pour générer au moins un signal représentatif dudit au moins un objet (51) en contact avec la zone de détection (11),

- où ladite étape de reconstruction (140) définit la répartition de pression dudit au moins un objet (51) en contact avec ladite zone de détection (11) lorsque ladite couche (5) est faite en un matériau souple se déformant lorsqu'il est en contact avec ledit au moins un objet (40), ledit au moins un signal représentatif dudit au moins un objet (51) comprenant ladite répartition de pression.

9. Procédé selon la revendication 8, dans lequel ledit au moins un signal représentatif dudit au moins un objet (51) est un signal approprié pour définir une forme et/ou une position dudit au moins un objet (51).

**10.** Procédé selon la revendication 8, dans lequel lesdits N émetteurs (15) sont actionnés individuellement.

**11.** Procédé selon la revendication 8, dans lequel est incluse une première étape (110) comprenant :

- l'initialisation géométrique (111) dans laquelle lesdits N émetteurs (15) et lesdits M récepteurs (20) sont activés par le biais dudit circuit de commande (50) pour déterminer automatiquement la position et l'ordre de chacun desdits N émetteurs (15) et de chacun desdits M récepteurs (20) ;
- la virtualisation (112) de ladite zone de détection (11) dans laquelle ladite zone de détection (11) est divisée en éléments basiques et chaque élément basique est associé à des coordonnées spatiales respectives.

**12.** Procédé selon la revendication 11, dans lequel ladite première étape (110) comprend en outre un étalonnage (120) dudit capteur (10) où chaque paire d'émetteur-récepteur, qui est activée de manière associée pendant ladite séquence prédéfinie, est associée à un signal de référence de manière à définir une séquence de signaux de référence pour lesdits M récepteurs (20).

**13.** Procédé selon la revendication 12, dans lequel il comprend une corrélation spatiale (122) qui fournit un mappage de ladite zone de détection (11) associant chaque paire d'émetteur-récepteurs, activée d'une manière associée, auxdits éléments basiques de ladite virtualisation (112) appartenant à une partie (12) de ladite zone de détection (11) associant ladite paire d'émetteur-récepteurs.

## Fig. 1

## Fig. 2

Fig. 3

Fig. 4

Fig. 5

Fig. 6a

Fig. 6b

Fig. 7a

Fig. 7b

Fig. 7d

Fig. 7c

Fig. 8a

Fig. 8b

Fig. 9

Fig. 10

Initialization and
Configuration

```
      ( Start )
         |
110      v
  +-------------------+
  | Initialization and|
  | Configuration     |
  +-------------------+
         |
140      v
  +-------------------+
  | Reconstruction    |
  +-------------------+
         |
         v
      ( End )
```

# Fig. 11

Initialization and
Configuration

```
      ( Start )
         |
111      v
  +----------------------+
  | Read Geometry        |
  | information          |
  +----------------------+
         |
112      v
  +----------------------+
  | Initialize pixel-map |
  | representing contact |
  | surface              |
  +----------------------+
         |
120      v
  +----------------------+
  | Read Calibration data|
  | for pairs of         |
  | Emitter/Detector     |
  +----------------------+
         |
122      v
  +----------------------+
  | Compute spatial      |
  | correlations between each|
  | pair of Emitter/Detector|
  | and pixel-map        |
  +----------------------+
         |
         v
      ( End )
```

# Fig. 12

Fig. 13

## REFERENCES CITED IN THE DESCRIPTION

**Patent documents cited in the description**

- US 20110261015 A, Lu
- US 20110115748 A
- WO 2009020940 A2
- US 20110175852 A, Goerzl
- EP 2369451 A2